# EUROPÄISCHE PATENTANMELDUNG

(11) **EP 2 982 896 A1**
(43) Veröffentlichungstag der Anmeldung: **10.02.2016**
(21) Anmeldenummer: 15174287.1
(22) Anmeldetag: 29.06.2015
(51) Int. Cl.: F16L 55/035, E04D 13/08

(54) **HOCHSCHALLDÄMMENDE ROHRBEFESTIGUNGSVORRICHTUNG**

(30) Priorität: 05.08.2014 DE 102014215394; 12.11.2014 DE 202014008983 U
(71) Anmelder: Poloplast GmbH & Co. KG, 4060 Leonding (AT)
(72) Erfinder: MAYRBÄURL, Erwin, 4481 Asten (AT)
(74) Vertreter: Hoefer & Partner Patentanwälte mbB

(57) **Zusammenfassung**

Die Erfindung bezieht sich auf eine Rohrbefestigungsvorrichtung mit einer ein Rohr (1) fest umspannbaren Fixierschelle (4) und einer das Rohr (1) mit einer vorgegebenen Toleranz (6) umgebbaren Lagerschelle (3), welche in einem Abstand zu der Fixierschelle (4) angeordnet ist und an einem Trägerbauteil (2) befestigbar ist, dadurch gekennzeichnet, dass die Fixierschelle (4) unterhalb der Lagerschelle (3) mittels zumindest einem, flexiblen Verbindungselement (5) mit der Lagerschelle (3) verbunden ist, wobei die Fixierschelle (4) im montierten Zustand mittels des Verbindungselements (5) hängend an der Lagerschelle (3) angeordnet ist.

## Beschreibung

Die Erfindung betrifft eine hochschalldämmende Rohrbefestigungsvorrichtung nach dem Obergriff des Anspruchs 1.

Wenn Rohre oder Leitungen an einer Wand im wesentlichen in vertikaler Position angebracht werden, wie es beispielsweise bei Fallrohren für Regenwasser oder ähnlichen Rohren an vertikalen Wänden von Gebäuden der Fall ist, so ist es üblich, solche Rohre in einem gewissen Abstand zur Wand mittels einer Rohrschelle aufzuhängen, die in Form eines Metallstreifens ausgebildet ist und eine stoßdämpfende Zwischenlage aufweist.

Derartige Rohrschellen sind zum Beispiel aus der DE-34 39 418 A, EP-A-0 188 649 A, EP-A-0 387 966 A und DE-A-37 08 065 A bekannt.

Die Rohrschelle wird im allgemeinen mittels einer an ihr angeschweißten Mutter auf das freie Ende einer Gewindestange oder ähnlichem aufgeschraubt, die von der tragenden Wand vorsteht. Das Befestigen muss derart erfolgen, dass das Rohr infolge der Schwerkraft nicht durch die Befestigungsschelle hindurch herabsinken kann. Aus diesem Grunde ist es allgemeine Praxis, die Befestigungsschelle ziemlich fest um das Rohr zu klemmen. Hierdurch wird die Zwischenlage zwischen dem Rohr und der Rohrschelle derart zusammengepresst, dass die dämpfende Wirkung der Zwischenlage gegenüber (Schall-) Schwingungen innerhalb des Rohres (welche von hindurchfließendem Wasser verursacht werden) unzureichend wird. Der mit dem durch das Rohr fallenden Wasser verbundene Körperschall kann auf diese Weise leicht über die Rohrbefestigung in den Raum hinter der zugehörigen tragenden Wand übertragen werden.

Die EP-A-0 508 085 A zeigt ein Verfahren zum Befestigen eines Rohres an einer Wand in im Wesentlichen vertikaler Lage und in stoß- sowie schalldämpfender Weise. Insbesondere wird dabei eine spezielle Rohrschelle verwendet, welche aus einem rinnenförmigen Profil gebildet ist. Bei der Anwendung umgibt die Rohrschelle lose das Rohr, wobei das Rinnenprofil mit seiner Öffnung aufwärts gerichtet ist und stoßdämpfendes Material enthält, um den Kragen welcher auf dem Rohr befestigt ist elastisch abzustützen.

In der EP-582354 A sowie in der EP-1146276 A werden Vorrichtungen zur Befestigung von Rohren mit wenigstens einer das Rohr fest umspannenden Fixierschelle und einer das Rohr mit einer vorgegebenen Toleranz umgebenden Stützschelle dargestellt, welche an einer Wand oder einem Pfeiler befestigt ist und mit ihrer einen als Stützfläche ausgebildeten Stirnseite gegen eine axial gegenüberliegende, als Tragfläche ausgebildeten Stirnseite der Fixierschelle anliegt und dadurch über die Fixierschelle das Rohr trägt, wobei das Material wenigstens im Bereich der Stütz- und/oder der Tragfläche schalldämmende Eigenschaften aufweist und wobei die Fixierschelle und die Stützschelle jeweils aus einem steifen Schellenelement mit einem Elastomerelement besteht.

Die EP 857907 B1 offenbart ebenfalls eine ähnliche Lösung, aber mit dem Unterschied, dass die beiden Schellen über ein gummielastisches Element praktisch in einem Stück ausgeführt sind.

Durch den Kontakt beider Schellenelemente aufgrund des Gewichtes des Rohrstranges, wird bei den genannten Doppelschellenverfahren in Abhängigkeit der Gewichtsaufnahme ein unterschiedlich starker Kontakt der Elemente erreicht, welcher einen hohen Einfluss auf die Funktionsfähigkeit der Entkopplung zwischen Rohr und Montagewand erzeugt.

Prüfungen haben ergeben, dass Radialschwingungen eines Rohrstranges wesentlich stärker über die Rohrbefestigung in das Mauerwerk eingeleitet und in den Nachbarraum abgestrahlt werden, als Axialschwingungen. Die Radialschwingungen werden in Abhängigkeit des Kontaktes der Schellenelemente beziehungsweise der Verpressung des Elastomerelementes der oben genannten Lösungen ebenso in das Mauerwerk übertragen.

Die EP-585543 A betrifft ebenfalls eine Rohrbefestigungsvorrichtung mit einer ein Rohr fest umspannenden Fixierschelle und einer das Rohr mit einer vorgegebenen Toleranz umgebenden Stützschelle, welche an einem Gegenstand, insbesondere einer Wand befestigbar ist und mit ihrer einen als Stützfläche ausgebildeten Stirnseite gegen eine axial gegenüberliegende, als Tragfläche ausgebildete Stirnseite der Fixierschelle angedrückt ist und dadurch über die Fixierschelle das Rohr trägt, wobei das Material wenigstens im Bereich der Stütz- und/oder Tragfläche schalldämmende Eigenschaften hat und vorzugsweise gummielastisch ist.

Die EP 0 585 543 A1 zeigt somit eine im montierten Zustand oben liegende Fixierschelle, die einen größeren Durchmesser aufweist, als eine darunter montierte, von dem Rohr beabstandete Stützschelle. Die Fixierschelle liegt seitlich verschiebbar auf der Stützschelle auf und ist mit dieser nicht verbunden. Eine ähnliche Lösung zeigt die EP 0 582 354 A1.

Die EP 1 146 276 A1 beschreibt eine Vorrichtung zum Befestigen von Rohren, bei welcher die Fixierschelle ebenfalls auf der Lagerschelle aufliegt und durch die dadurch vorliegende Linienberührung eines runden Querschnittes auf einen konischen Querschnitt, eine relativ kleine Kontaktfläche aufweist.

Aus der EP 0 857 907 B1 ist eine Rohrschellenanordnung bekannt, bei welcher die Fixierschelle und die Lagerschelle einstückig miteinander verbunden sind, bei welcher aber die Fixierschelle ebenfalls oberhalb der Stützschelle angeordnet ist und auf dieser aufliegt, was zu einer Verpressung der Kontaktfläche führen kann. Prüfungen haben ergeben, dass radial in einen Rohrstrang eingebrachte Energie wesentlich stärker über die Rohrbefestigung in das Mauerwerk eingeleitet und in den Nachbarraum abgestrahlt wird, als axial eingebrachte Energie. Dies ist darauf zurückzuführen, dass Radialschwingungen der Rohrwand durch die Befestigung normal (senkrecht) zur Befestigungswand, die Befestigungswand direkt zum Schwingen anregen.

Allen oben angeführten Doppelschellenkonstruktionen liegt das Problem zugrunde, dass der Kontaktbereich beider Schellenelemente aufgrund des Gewichtes des Rohrstranges so stark verpresst wird, dass sowohl Axialschwingungen wie auch Radialschwingungen und Kräfte von der Fixierschelle zur Lagerschelle übertragen werden.

Der Erfindung liegt die Aufgabe zugrunde, eine Rohrbefestigungsvorrichtung der eingangs genannten Art zu schaffen, welche bei einfachem Aufbau und einfacher, kostengünstiger Herstellbarkeit nur geringe Anteile von Schwingungen normal zur Befestigungswand überträgt.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass die Fixierschelle und die Lagerschelle mittels zumindest einem flexiblen, biegeweichen und/oder elastischen Verbindungselement hängend verbunden sind. Aufgrund dieser Ausgestaltung des Verbindungselementes werden hauptsächlich Axialkräfte- und Schwingungen zwischen Fixierschelle und Lagerschelle übertragen. Wird das Schellensystem außermittig belastet, so entstehen in den biegeweichen Verbindungselementen unterschiedlich hohe Querkraftkomponenten, welche das Rohrsystem automatisch zentrieren, sodass vermieden wird, dass das Rohr Kontakt mit der Lagerschelle bekommt und dadurch wieder Radialschwingungen des Rohres an die Wand übertragen werden.

Die größere Lagerschelle ist somit, bei einem vertikal angeordneten Rohr, oberhalb der Fixierschelle angebracht und umgibt das Rohr mit einer Toleranz, sodass die Lagerschelle mittels des zumindest einen flexiblen Verbindungselements an der Lagerschelle hängt.

Das flexible Verbindungselement kann erfindungsgemäß konisch oder zylindrisch ausgebildet sein. Erfindungswesentlich ist, dass die Lagerschelle mittels des Verbindungselements im montierten Zustand des Rohrs (bei vertikaler Anordnung des Rohrs) an der Fixierschelle hängt. Das Verbindungselement dient somit dazu, hängend das Gewicht des Rohres aufzunehmen und das Rohr zugleich relativ zu der Fixierschelle zu zentrieren, damit das Rohr keinen schallübertragenden Kontakt mit der Lagerschelle bekommt. Aus diesem Grunde hat die Lagerschelle auch einen größeren Innendurchmesser, als der Außendurchmesser des Rohres, sodass sich eine Toleranz (Freiraum) ergibt.

Um den Anteil an übertragbaren Radialschwingungen zu senken, ist es vorteilhaft, bei einer konischen Ausbildung des Verbindungselements den Winkel des konischen Verbindungselements zur Rohrachse kleiner als 45° zu wählen.

Unter dem Begriff flexibel wird erfindungsgemäß ein Material verstanden, welches elastisch, biegeweich und/oder biegbar ist. Bei einem Verbindungselement, welches in Form eines Streifens oder Bandes ausgebildet ist, bedeutet dies, dass dieser Streifen zumindest in Querrichtung seiner Längserstreckung elastisch oder biegbar oder biegeweich oder flexibel ausgebildet ist. Hierdurch wird insbesondere sichergestellt, dass Querschwingungen des Rohres nicht übertragen werden. Um den Umfang verteilt, können mehrere schmale Streifen oder Bänder angeordnet werden, z. B. zwei Streifen.

Gelöst wird die Aufgabe nach der Erfindung somit dadurch, dass die größere Lagerschelle und die am Rohr anliegende Fixierschelle über zumindest ein biegeweiches, gummiähnliches Verbindungselement verbunden werden. Dabei stützt sich die Fixierschelle nicht an der Lagerschelle ab, sondern hängt an dem biegeweichen gummielastischen Verbindungselement an der Lagerschelle. Dadurch wird der Rohrstrang eigenständig in das Zentrum der Lagerschelle zentriert und ein Kontakt zwischen der Lagerschelle und dem Rohr auch bei weniger professioneller Installationsweise verhindert.

Wie sich insbesondere auch aus der nachfolgenden Beschreibung ergibt, ist es besonders vorteilhaft, wenn die Lagerschelle, das Verbindungselement und die Fixierschelle einstückig miteinander verbunden sind. Zum einen wird hierdurch eine ausreichende Kraftübertragung bei der hängenden Montage des Rohrs gewährleistet. Zum anderen vereinfacht sich die Herstellung.

Nach einer bevorzugten Ausführungsform der Erfindung bestehen die Fixierschelle und die Lagerschelle jeweils aus zwei steifen Halbschellenelementen. Je zwei übereinanderliegende Halbschellenelemente sind mit einem biegeweichen, flexiblen, elastischen Elastomerelement (zum Beispiel aus der Werkstoffgruppe SBR, NBR, EPDM, Silikonkautschuk oder thermoplastische Elastomere) koaxial verbunden. Durch die Aufteilung der Schellen in zwei getrennte Elemente mit verschiedenen Materialeigenschaften kann zum einen die notwendige Festigkeit der Fixier- und der Lagerschelle erreicht werden, wobei gleichzeitig die zwischen den beiden Schellen benötigte schalldämmende Eigenschaft optimierbar ist. Es ist möglich, Elastomermischungen unter Einarbeitung von Schwerspat zu optimieren. Durch die Verwendung von beispielsweise gerippten oder genoppten Innenflächen der Elastomerelemente im Bereichen der steifen Elemente, werden die Kontaktflächen zwischen den Elastomeren und dem Rohr verkleinert, wodurch die schalldämmenden Eigenschaften weiter verbessert werden.

Auch eine Verwendung von mehreren unterschiedlich gefüllten Elastomersystemen ist möglich. Hierdurch kann über Dichte- und Härteunterschiede im Verbindungsband der übereinanderliegenden Schellenelemente der akustische Widerstand erhöht und somit eine zusätzliche Dämpfung der Schallenergie erreicht werden.

Das Elastomerelement kann kostengünstig im Spritzgießprozess gefertigt werden. Dabei ist es vorteilhaft, die steifen Elemente in ein Spritzgießwerkzeug einzulegen und das Elastomerelement im Montagespritzguss aufzubringen. Im Spritzgießprozess ist es möglich, Verstärkungsmaterial wie zum Beispiel Textilstreifen im Bereich der Bänder einzubringen, welche die Festigkeit der Bänder erhöhen, jedoch kaum Einfluss auf die Biegeweichheit haben. Zusätzlich kann der Materialeinsatz optimiert werden, da es ausreichend ist, jede Hälfte der Verbindungsschellen mit 1-2 Berührungspunkten zum Rohr auszuführen, sodass das Rohr von 3 Auflagepunkten in der Fixierschelle zentriert wird. Ein durchgängiges Ummanteln der steifen Elemente ist nicht erforderlich.

Eine weitere kostengünstige Möglichkeit ist die Vorfertigung des Elastomerelementes (Verbindungselements) im Extrusionsprozess mit anschließendem Beschnitt und Montage auf den steifen Elementen der Schellen.

Im Falle der Lagerschelle, die bei konzentrischer Anbringung das Rohr mit einer vorgegebenen Toleranz umgibt, verhindert das an der Innenseite angebrachte Elastomerelement bei einer radialen Verschiebung der Rohrachse den direkten Kontakt des steifen Schellenelements mit dem Rohr, der zu einer deutlichen Erhöhung der zur Mauer hin übertragenen Schallenergie führen würde.
Bevorzugt ist zumindest eines der steifen Schellenelemente aus Metall hergestellt. Dadurch kann eine einfache Herstellung bei gleichzeitiger Rohrstabilität gewährleistet werden. Eine Ausführung in Kunststoff ist jedoch ebenfalls denkbar und hat keinen negativen Einfluss auf die akustische Wirkung der erfindungsgemäßen Rohrbefestigungsvorrichtung.

Bevorzugt weist zumindest eines der steifen Schellenelemente ein im Wesentlichen flachstabförmiges Profil auf. Durch diese handelsübliche Ausführungsform ist eine besonders kostengünstige Herstellung einer erfindungsgemäß ausgebildeten Rohrbefestigungsvorrichtung möglich.

Der Vorteil der Erfindung liegt somit unter anderem darin, dass die schalldämmende Wirkung der Rohrschelle unabhängig vom Verleger des Rohrsystems ist. Unterschiedliche Kontakte zwischen Stütz und Fixierschelle können nur über extrem exzentrische Montage des Rohrsystems erzeugt werden. Die elastischen Bänder werden jedoch das Rohrsystem weitestgehend in der Lagerschelle zentrieren. Auf diese Weise ist sowohl bei konzentrischer als auch bei nicht konzentrischer Anbringung der Lagerschelle die gewünschte Schalldämmung zwischen Rohr und Mauer bei einwandfreier Halterung gegeben.

Im Folgenden wird die Erfindung anhand eines Ausführungsbeispiels in Verbindung mit der Zeichnung beschrieben. Dabei zeigt die einzige Figur eine schematische Seitenschnittansicht der erfindungsgemäßen Rohrbefestigungsvorrichtung im montierten Zustand.

Dabei zeigt:
- Fig. 1: eine schematische Schnittansicht eines ersten Ausführungsbeispiels der erfindungsgemäßen Rohrbefestigungsvorrichtung,
- Fig. 2: eine perspektivische Ansicht der in Fig. 1 gezeigten Rohrbefestigungsvorrichtung,
- Fig. 3: eine perspektivische Ansicht eines weiteren erfindungsgemäßen Ausführungsbeispiels, und
- Fig. 4: eine schematische Schnittansicht, analog der Darstellung der Fig. 1, eines weiteren Ausführungsbeispiels der erfindungsgemäßen Rohrbefestigungsvorrichtung.

Bei den nachfolgenden Ausführungsbeispielen werden gleiche Teile jeweils mit gleichen Bezugszeichen versehen, sodass auf eine nochmalige Beschreibung dieser Bauteile verzichtet werden kann.

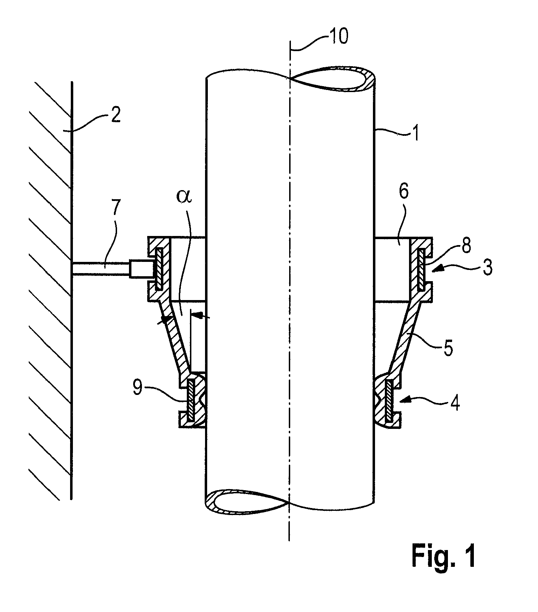

Die Fig. 1 zeigt in schematischer Längsschnittdarstellung ein Rohr 1, welches vertikal angeordnet ist. In einem Abstand zum Rohr 1 ist ein Trägerbauteil 2, beispielsweise in Form einer Wand, dargestellt.

Das Rohr wird durch eine Fixierschelle 4 fest umspannt. Die Fixierschelle 4 kann halbschalenartig ausgebildet sein, sie kann jedoch auch in elastischer Weise einstückig ausgestaltet sein. In ihrem Inneren ist in der Fixierschelle 4 ein flachbandartiges Schellenelement 9 angeordnet, durch welches die Fixierschelle 4 gespannt wird. Die Fixierschelle 4 ist an ihrer radial inneren Seite mit einem elastischen Material versehen, sodass das Schellenelement 9 durch das elastische Material umschlossen ist.

Bei der vertikalen Anordnung, welche in der Fig. 1 gezeigt ist, ist oberhalb der Fixierschelle 4 eine Lagerschelle 3 angeordnet, welche einen Durchmesser aufweist, der größer ist, als der Außendurchmesser des Rohrs 1, sodass sich eine Toleranz 6 ergibt. Somit wird verhindert, dass das Rohr 1 sich in direktem Kontakt mit der Lagerschelle 3 befindet. Auch die Lagerschelle 3 umfasst ein flachbandartiges Schellenelement 8, welches an zumindest einer dem Trägerbauteil 2 zugewandten Seite mittels einer Befestigungsvorrichtung 7 mit dem Trägerbauteil 2, beispielsweise einer Wand, verbunden ist. Die Schellenelemente 8, 9 können aus Metall oder aus Kunststoff gefertigt sein.

Auch die Lagerschelle 3 kann halbschalenartig ausgebildet sein, so wie dies beispielsweise aus der Fixierschelle 4 vorbekannt ist.

Erfindungsgemäß sind die Lagerschelle 3 und die Fixierschelle 4 mittels zumindest eines flexiblen oder biegeweichen oder elastischen Verbindungselement 5 verbunden. Die Fixierschelle 4 hängt somit bei der vertikalen Anordnung gemäß dem Ausführungsbeispiel an der Lagerschelle 3. Im Falle einer konischen Ausführung des Verbindungselementes ist es vorteilhaft, wenn der Winkel α ≤ 45 ° ist.

Bei dem ersten Ausführungsbeispiel ist sowohl das Schellenelement 8 als auch das Schellenelement 9 jeweils von dem Material umschlossen, welches auch das konische Verbindungselement 5 bildet. Hierdurch ergibt sich eine sehr einfache Herstellbarkeit, so wie dies obenstehend erläutert wurde.

Das Rohr 1 hängt somit, gehalten durch die Fixierschelle 4 mittels des Verbindungselements 5 an der Lagerschelle 3.

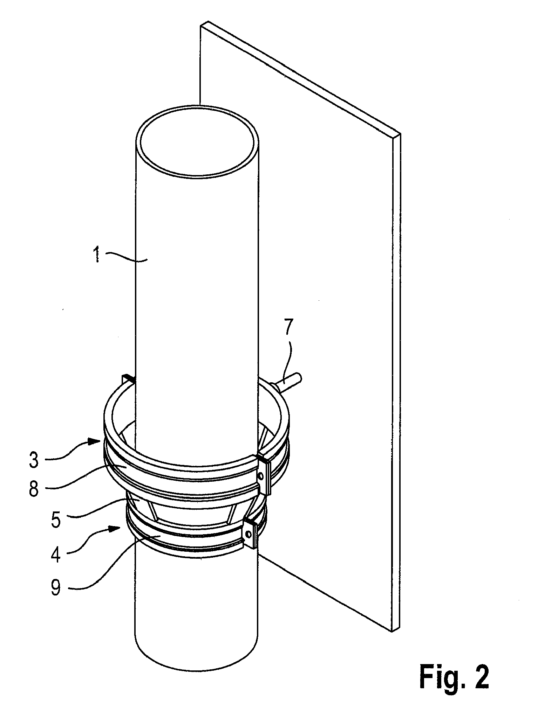

Das Verbindungselement 5 kann so ausgebildet sein, dass es als konische Halbschale gefertigt ist, es ist jedoch auch möglich, mehrere um den Umfang verteilte Bänder anzuordnen, sodass sich Zwischenräume ergeben, aus denen beispielsweise eintretende Flüssigkeiten oder Festkörper entfernt werden können, um die Entkoppelung des Rohrs 1 von der Lagerschelle 3 sicherzustellen. Eine derartige Ausgestaltung ist insbesondere in Fig. 2 ersichtlich. Bei dieser Variante erstrecken sich um den Umfang nur einzelne streifenförmige Verbindungselemente 5. Das Ausführungsbeispiel zeigt eine extrudierte Version, bei welcher ausgestanzte Bänder (Schellenelemente 8, 9) verwendet werden. Wie aus den Fig. 1 und 2 ersichtlich ist, sind die Schellenelemente 8, 9 jeweils an ihrer Innenseite (rohrseitig) vollständig von dem elastischen, biegeweichen Material umhüllt, um die Axialkräfte aufnehmen zu können. Es ist jedoch auch möglich, über Durchbrüche in den Bändern oder Streifen genügend Festigkeit in der Verbindung zwischen den steifen und den flexiblen Bereichen der Schellenelemente 8, 9 zu erreichen.

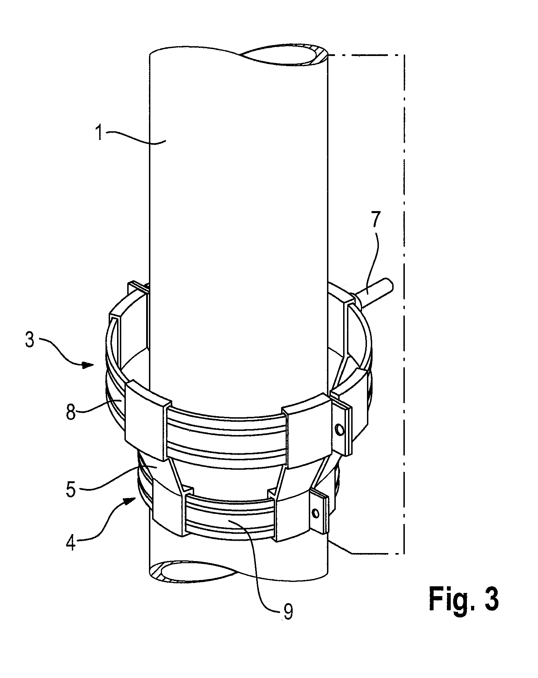

Die Fig. 3 zeigt eine Ausgestaltungsvariante, bei welcher Stahlschellen mit Schellenelementen 8, 9 in einem Spritzgussverfahren partiell an vorgegebenen Bereichen ummantelt werden. Die Ummantelung mittels des elastischen, biegeweichen Materials umschließt oder umgreift die gesamten Schellenelemente 8, 9, so wie dies in Fig. 3 dargestellt ist. Hierdurch erfolgt eine sichere Verankerung der Fixierschelle 4, welche im montierten Zustand an der Lagerschelle 3 mittels der Verbindungselemente 5 hängt.

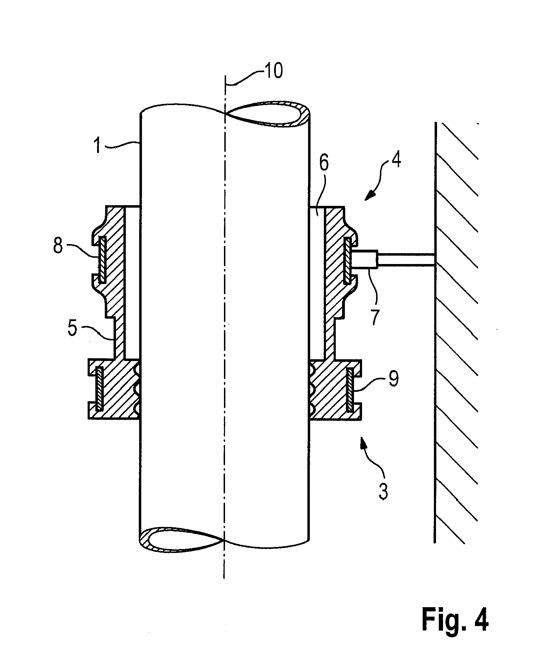

Die Fig. 4 zeigt ein weiteres Ausführungsbeispiel, analog Fig. 1, bei welchem das Verbindungselement 5 zylindrisch ausgebildet ist. Wie bei den vorhergehenden Ausführungsbeispielen kann das zylindrische Verbindungselement 5 als Halbschale oder in Form mehrerer um den Umfang verteilt angeordneter Streifen oder Bänder ausgestaltet sein.

Bei allen Ausführungsbeispielen hängt im montierten Zustand des Rohrs die Fixierschelle 4 mittels des flexiblen Verbindungselements 5 an der Lagerschelle 3.

### Bezugszeichenliste:

- 1: Rohr
- 2: Trägerbauteil
- 3: Lagerschelle
- 4: Fixierschelle
- 5: Verbindungselement
- 6: Toleranz
- 7: Befestigungsvorrichtung
- 8: Scheilenelement
- 9: Schellenelement
- 10: Rohrachse

## Patentansprüche

1. Rohrbefestigungsvorrichtung mit einer ein Rohr (1) fest umspannbaren Fixierschelle (4) und einer das Rohr (1) mit einer vorgegebenen Toleranz (6) umgebbaren Lagerschelle (3), welche in einem Abstand zu der Fixierschelle (4) angeordnet ist und an einem Trägerbauteil (2) befestigbar ist, **dadurch gekennzeichnet, dass** die Fixierschelle (4) unterhalb der Lagerschelle (3) mittels zumindest einem, flexiblen Verbindungselement (5) mit der Lagerschelle (3) verbunden ist, wobei die Fixierschelle (4) im montierten Zustand mittels des Verbindungselements (5) hängend an der Lagerschelle (3) angeordnet ist.

2. Rohrbefestigungsvorrichtung nach Anspruch 1, **dadurch gekennzeichnet, dass** das Verbindungselement (5) zur Rohrachse (10) biegeweich ausgebildet ist.

3. Rohrbefestigungsvorrichtung nach einem der Ansprüche 1 oder 2, **dadurch gekennzeichnet, dass** das flexible Verbindungselement (5) konisch ausgebildet ist.

4. Rohrbefestigungsvorrichtung nach einem der Ansprüche 1 oder 2, **dadurch gekennzeichnet, dass** das flexible Verbindungselement (5) zylindrisch ausgebildet ist.

5. Rohrbefestigungsvorrichtung nach einem der Ansprüche 1 bis 4, **dadurch gekennzeichnet, dass** die Fixierschelle (4) und die Lagerschelle (3) als Halbschalen ausgebildet sind.

6. Rohrbefestigungsvorrichtung nach einem der Ansprüche 1 bis 4, **dadurch gekennzeichnet, dass** die Fixierschelle (4) und die Lagerschelle (3) aus mehreren Segmenten ausgebildet sind.

7. Rohrbefestigungsvorrichtung nach einem der Ansprüche 1 bis 6, **dadurch gekennzeichnet, dass** das Verbindungselement (5) als konische oder zylindrische Halbschale ausgebildet ist.

8. Rohrbefestigungsvorrichtung nach einem der Ansprüche 1 bis 7, **dadurch gekennzeichnet, dass** das Verbindungselement (5) in Form mehrerer bandartiger, um den Umfang verteilt angeordneter Teilelemente ausgebildet ist.

9. Rohrbefestigungsvorrichtung nach Anspruch 7, **dadurch gekennzeichnet, dass** der Konuswinkel α, bezogen auf die Mittelachse der Fixierschelle (4) und der Lagerschelle (5) ≤ 45° beträgt.

10. Rohrbefestigungsvorrichtung nach einem der Ansprüche 1 bis 9, **dadurch gekennzeichnet, dass** die Fixierschelle (4) und die Lagerschelle (3) jeweils ein metallisches Schellenelement (8, 9) umfassen, welches jeweils mit dem Verbindungselement (5) verbunden ist.

11. Rohrbefestigungsvorrichtung nach einem der Ansprüche 1 bis 9, **dadurch gekennzeichnet, dass** die Fixierschelle (4) und die Lagerschelle (3) jeweils ein Schellenelement (8, 9) aus Kunststoff umfassen, welches jeweils mit dem Verbindungselement (5) verbunden ist.

12. Rohrbefestigungsvorrichtung nach Anspruch 10 oder 11, **dadurch gekennzeichnet, dass** die Schellenelemente (8, 9) in Endbereichen des Verbindungselements (5) angeordnet sind.

13. Rohrbefestigungsvorrichtung nach einem der Ansprüche 1 bis 12, **dadurch gekennzeichnet, dass** die Fixierschelle (4) an ihrer radial innenliegenden Seite elastisch ausgebildet ist.

14. Rohrbefestigungsvorrichtung nach einem der Ansprüche 1 bis 13, **dadurch gekennzeichnet, dass** das Verbindungselement (5) aus mehreren unterschiedlichen Elastomeren mit unterschiedlicher Dichte und Härte gefertigt ist und/oder, dass das Verbindungselement (5) Verstärkungsgewebe enthält.

15. Rohrbefestigungsvorrichtung nach einem der Ansprüche 1 bis 14, **dadurch gekennzeichnet, dass** die Lagerschelle (3), die Fixierschelle (4) und das Verbindungselement (5) einstückig ausgebildet sind.
